Europäisches Patentamt

European Patent Office

Office européen des brevets

(11) Publication number: **0 503 503 A1**

## EUROPEAN PATENT APPLICATION

(21) Application number: **92103884.0**

(22) Date of filing: **06.03.92**

(51) Int. Cl.⁵: **H02K 5/124**, F16C 33/76, H02K 5/173

(30) Priority: **08.03.91 JP 12888/91**

(43) Date of publication of application:
**16.09.92 Bulletin 92/38**

(84) Designated Contracting States:
**DE FR GB**

(71) Applicant: **MITSUBISHI DENKI KABUSHIKI KAISHA**
**2-3, Marunouchi 2-chome Chiyoda-ku**
**Tokyo(JP)**

(72) Inventor: **Kuroda, Motokazu, c/o Mitsubishi Electric**
**Engineering Company Limited, Himeji Division**
**6, Sadamoto-machi, Himeji-shi, Hyogo(JP)**

(74) Representative: **Füchsle, Klaus, Dipl.-Ing. et al**
**Hoffmann . Eitle & Partner Patentanwälte**
**Arabellastrasse 4**
**W-8000 München 81(DE)**

(54) A bearing housing of an electric rotary machine.

(57) In a bearing housing for an electric rotary machine which accommodates and supports a bearing, a simple member is added to improve the water proof and dust proof of the bearing. Self-lubricating members (10, 11) are interposed respectively between a pulley (1) secured to a rotary shaft (2) and a bearing housing (6) and between a spacer (7) mounted on the rotary shaft and a retainer (8). The self-lubricating members are rotated so as to seal closely the gaps between those members confronted with each other.

FIG. 1

## BACKGROUND OF THE INVENTION

This invention relates to a bearing housing of an electric rotary machine such as an alternator.

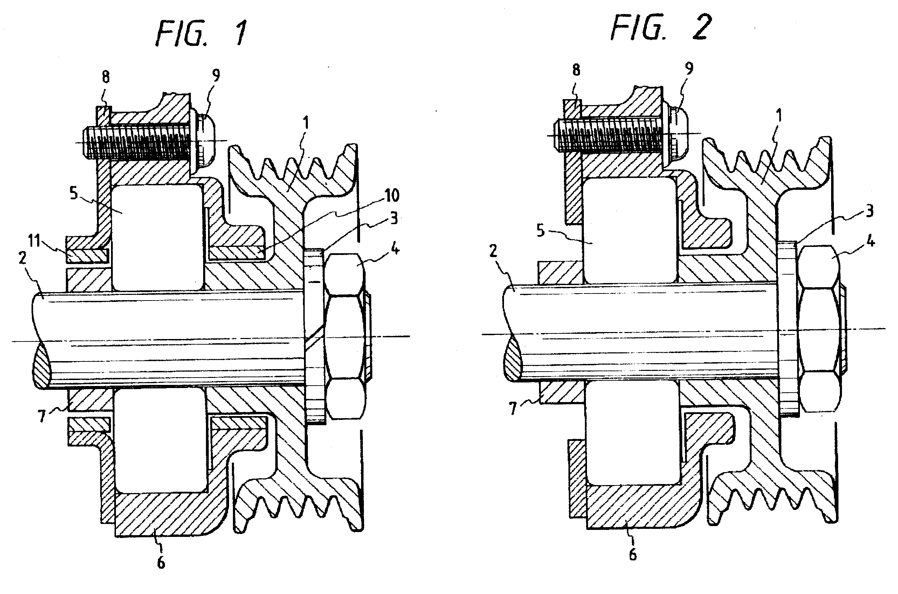

FIG. 2 is a longitudinal sectional view showing a conventional bearing housing of an electric rotary machine.

In FIG. 2, reference numeral 1 designates a pulley driven by a drive unit (not shown); 2, a rotary shaft on which the pulley 1 is fixedly mounted with a Spring washer 3 and a tightening nut; 5, a bearing for rotatably supporting the rotary shaft 2; 6, a bearing housing for accommodating the bearing 5; 7, a spacer; and 8, a retainer for retaining the bearing 5. The retainer 8 is fixedly secured to the bearing housing 5 with screws 9.

The functions of the above-described various members will be described.

A drive force is transmitted from the drive unit (not shown) through the pulley 1 to the rotary shaft 2. The rotary shaft 2 is smoothly rotated, being supported by the bearing 5. On the other hand, the bearing 5 is positively supported on the bearing housing 6 through the retainer 8.

The conventional electric rotary machine is as described above. That is, clearances are provided, respectively, between the pulley 1 and the bearing housing 6 and between the spacer 7 and the retainer 8 which are large enough to prevent the confronting members from being brought into slide contact with each other. Hence, water and dust may go in it through the clearances, thus decreasing the service life of the bearing 5.

## SUMMARY OF THE INVENTION

Accordingly, an object of the present invention is to eliminate the above-described difficulty accompanying a conventional bearing housing in an electric rotary machine. More specifically, an object of the invention is to provide a bearing housing for an electric rotary machine which is improved in water proof and in dust proof by addition of a simple member.

According to the present invention, self-lubricating members are interposed between the rotary member and an annular member which is provided on the side of the bearing housing in such a manner as to be close to the rotary member.

In the bearing housing according to the present invention, the self-lubricating member interposed between the rotary member and the annular member provided on the side of the bearing housing seals the gap therebetween when rotated. The self-lubricating prevents the entrance of water and dust into the bearing.

## BRIEF DESCRIPTION OF THE DRAWINGS

FIG. 1 is a longitudinal sectional view showing a bearing housing in an electric rotary machine, which constitutes an embodiment of the present invention.

FIG. 2 is a longitudinal sectional view showing a conventional bearing housing in an electric rotary machine.

## DETAILED DESCRIPTION OF THE PREFERRED EMBODIMENTS

One embodiment of the present invention will be described with reference to the accompanying drawings.

FIG. 1 is a longitudinal diagram showing a bearing housing in an electric rotary machine according to the embodiment of the invention. In FIG. 1, parts corresponding functionally to those which have been already described with reference to FIG. 2 are therefore designated by the same reference numerals.

In FIG. 1, reference numeral 10 designates a first self-lubricating member which is interposed between the pulley 1 secured to the rotary shaft 2 and the bearing housing 6, and is secured to the latter 6; and, 11, a second self-lubricating member which is interposed between the spacer 7 secured to the rotary shaft 2 and the retainer 8, and is secured to the latter 8. That is, the first and second self-lubricating members 10 and 11 are rotated, respectively, between the pulley 1 and the bearing housing 6 and between the spacer 7 and the retainer 8. For example, the first and second self-lubricating members are made of oily material, fluorocarbonic resin, fluoro resin, and graphite.

The above-described members operate as follows:

When the rotary shaft 2 is rotated while being supported by the bearing 5, the self-lubricating members 10 and 11 are rotated, respectively, in the clearance between the pulley 1 and the bearing housing 6 and in that between the spacer 7 and the retainer 8, thus sealing the spaces between these members confronted with each other, which improves the water proof and dust proof of the bearing 5. When the clearance is about 0.01-0.2mm, the rotary machine according to the present invention brings into full play.

As was described above, according to the present invention, the self-lubricating members are merely disposed between the rotary members and the annular member provided on the side of the bearing housing. The self-lubricating members thus disposed are rotated, so that the gaps between those members confronted with each other are sealed. As a result, the bearing is improved both in water proof and in dust proof; that is, its service life is greatly increased.

**Claims**

1. An electric rotary machine comprising:
   a rotary member;
   bearing means for supporting said rotary member;
   a bearing housing means accommodating and supporting said bearing means; and
   self-lubricating members being interposed between said rotary member and said bearing housing means for sealing gaps therebetween.

2. A device as claimed in claim 1, wherein self-lubricating member is mounted on said bearing housing means.

3. A device as claimed in claim 1, wherein a clearance between said rotary member and said self-lubricating member is within a range of 0.01mm-0.2mm.

4. The rotary machine claimed as claim 1, wherein said self-lubricating member is made of oily material.

5. The rotary machine claimed as claim 1, wherein said self-lubricating member is made of fluorocarbonic resin.

6. The rotary machine claimed as claim 1, wherein said self-lubricating member is made of fluoro resin.

7. The rotary machine of claim 1, wherein said self-lubricating member is made of graphite.

FIG. 1

FIG. 2

EP 0 503 503 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | DE-A-2 406 746 (DORNIER SYSTEM GMBH)<br>* page 3, lines 3-5; figure 1 *<br>--- | 1-4 | H 02 K 5/124<br>F 16 C 33/76<br>H 02 K 5/173 |
| Y | FR-A-1 559 385 (ROTRON MANUFACTURING COMPANY, INC.)<br>* column 4, lines 13-19; figure *<br>--- | 1-4 | |
| A | GB-A-2 077 371 (IAO INDUSTRIE RIUNITE SPA.)<br>* page 2, lines 51-59; figure 1 *<br>--- | 2,7 | |
| A | FR-A-2 311 978 (CARBOXYQUE FRANCAISE)<br>* page 2, lines 35-39; figure *<br>--- | 2,7 | |
| A | FR-A-2 398 237 (B. LEONETTI)<br>* page 5, lines 29-33; figures 1,2 *<br>--- | 2,6 | |
| A | DE-A-2 004 167 (SCHORCH GMBH)<br>* claim 1; figures 1,2 *<br>--- | 1 | |
| A | US-A-4 304 446 (H.M. GOODINE)<br>* column 1, lines 34-56; figure 1 *<br>----- | 1 | TECHNICAL FIELDS SEARCHED (Int. Cl.5)<br><br>H 02 K<br>F 16 C<br>F 16 L |

The present search report has been drawn up for all claims

| Place of search | Date of completion of the search | Examiner |
|---|---|---|
| BERLIN | 19-06-1992 | LEOUFFRE M. |

EPO FORM 1503 03.82 (P0401)